Europäisches Patentamt

European Patent Office

Office européen des brevets

(11) Publication number: **0 204 940**
A2

# EUROPEAN PATENT APPLICATION

(21) Application number: 86105927.7

(22) Date of filing: 30.04.86

(51) Int. Cl.⁴: **A 23 P 1/12**
A 23 C 20/00, A 23 L 1/04
A 23 L 1/217, A 21 D 2/34

(30) Priority: 10.06.85 US 743335

(43) Date of publication of application:
17.12.86 Bulletin 86/51

(84) Designated Contracting States:
BE CH DE FR GB IT LI LU NL SE

(71) Applicant: National Starch and Chemical Corporation
10 Finderne Avenue Box 6500
Bridgewater New Jersey 08807(US)

(72) Inventor: Nappen, Bernard H.
19 Penn Road
Cranford New Jersey 07016(US)

(72) Inventor: Koval, Patricia L.
Route No. 519
Baptistown New Jersey 08803(US)

(74) Representative: Hagemann, Heinrich, Dr. et al,
Patentanwälte GEYER, HAGEMANN & KEHL Postfach
860329
D-8000 München 86(DE)

(54) Blends suitable for the preparation of formed savory morsels for food products.

(57) A dry savory blend suitable for the preparation of formed
pieces consists essentially of 5-85% of a savory solids, 10-30%
of total oil or fat, 5-30% of a filler, 3-12% of water, and 0-1% of a
gum, the percentages being by weight and totalling 100%.
The blend is formed under conditions of low shear and low
temperature, preferably in a forming extruder. The dry, shelf-
stable pieces are useful in various food products including
dry, cooked, or non-cooked preparations.

# BLENDS SUITABLE FOR THE PREPARATION OF FORMED
# SAVORY MORSELS FOR FOOD PRODUCTS

The present invention is directed to a blend suitable for the preparation of formed savory pieces of cheese and/or meat for various food products and to the low shear and low temperature forming method used for their preparation.

A dry savory blend suitable for the preparation of formed savory pieces), consists essentially of 5-85% of savory solids; 10-30% of total oil or fat; 5-30% of a filler; 3-12% of water; and 0-1% of a gum; the percentages being by weight and totalling 100%, the piece being formed under conditions of low shear and low temperature.

Typically the mixture contains cheese, meat, shellfish, or like seasoned pieces, an edible salt, acid, humectant, and/or natural or artifical flavor. Preferably, the blend contains 20-50% dehydrated savory solids; 15-30% total oil or fat; 15-30% filler; 5-8% water; 0.01-0.05% gum; and 5-10% sugar. The presence of the water is necessary for the forming; however, too much water can produce a piece that is excessively tacky and that becomes difficult to work, transport, and form. The oil or fat may be added to the blend or present in the dehydrated savory foodstuff of blend.

The blend is processed without the use of external heat under low shear conditions and a low r.p.m., i.e., a temperature below that at which the fat becomes excessively mobile. It is formed with the use of a former or transport extruder rather than a cooker extruder so as to compact and form the extrudate. If necessary, the temperature can be controlled by circulating water or cooling fluids through the hollow-shaft and hollow- flight forming extruder screws. This may be done in conjunction with or in place of the use of jacketed extruder barrels circulating water or a cooling fluid.

Generally, piece sizes and shapes may be changed by changing the die assembly or, in some cases, by merely changing the die inserts. A variable speed sizing knife at the die permits the control of the extrudate length. Typically, the extrudate benefits from a brief air cooling between the die and the sizing knife - usually for pieces that are to be used as ribbons. If the pieces are to be cut into morsels, the cutting can be carried out as the extrudate leaves the die. Suitable forming extruders, both single screw and double screw with a split/hinged or sectional barrel, are available from Wenger Manufacturing, Sabetha, Kansas. These forming extruders operate at 10-100 r.p.m. in contrast with cooker extruders which operate at 300-500 r.p.m. The extruded cut pieces are generally conveyed by an air vacuum or on a belt to the cooling area. An ordinary Kitchen Aid meat grinder as well as a rubber mill, a tablet press, and the like, can also be used.

The resulting low moisture, savory pieces have the appearance, texture, and taste of the cheese, meat, or savory mixture from which they are prepared.

Flow agents such as specialty starches (e.g., DRY-FLO® available from National Starch and Chemical Corp.), or various silicon dioxides may be applied after the extrusion and cutting steps to prevent agglomeration during storage. Other advantages of these pieces include their excellent flavor and color, good shelf life, low water activity (typically less than 0.7), and ease of handling. In addition, they retain their structural integrity after baking and show minimal flavor loss after baking or freezing, as well as after reheating of finished baked products containing

The savory blend can also be coextruded to produce foods with dual texture and taste, e.g., cheese- or meat-filled snacks. In addition to being useful in bakery products such as crackers, breads, rolls, pie and pizza crust, and the like, they can be used in cooked foods such as appetizers, sauces, and entrees and food products such as salad dressings, dips, and snacks.

Suitable savory ingredients include dehydrated foods such as cheese (e.g., bleu, cheddar, Parmesan, and Romano), meats (e.g., pepperoni, sausage, bacon, beef, pork, ham, and poultry (e.g., chicken), and seafood (e.g., fish, shrimp and crab). The foodstuff (cheese, meat, etc.) can be in the form of fermented, freeze dried, or drum-dried starch foodstuff blend such as that described in U.S. Pat. No. 3,940,505 (issued Feb. 24, 1976 to B. H. Nappen). Also suitable are simulated dehydrated products based on hydrolyzed vegetable proteins or other flavor or seasoning analogs. However, blends of natural and artificial or all artificial colors and flavors can also be utilized if desired.

The oils or fats used herein are typical food ingredients such as hydrogenated vegetable oils or fats. They should be stable to oxidation for good shelf life. A range of 15-30% appears optimum in most instances. If a solid fat is used, it can be melted prior to addition to the blend.

The fillers suitable for use herein are wheat flour, whey, yeast, starch, and dextrose. Such agents are used when it is desirable to add a non-functional bulking agent to the blend.

The gums suitable for use herein include any of those typically used in food systems, such as alginates, guar gum, locust bean gum, xanthan gum, carageenan, pectin, methyl cellulose, hydroxypropyl cellulose, and mixtures thereof. The gums are dissolved in water prior to their addition to the mix. Heat was used, where necessary, to aid in solubilization of the gums, e.g., with a blend of locust bean and xanthan gum. The gum aids in the extrusion by acting as a slip agent; however, it is not required. It is preferred because of its water-holding properties and film-forming which are desirable in the extruded piece.

In the examples which follow, all parts are by weight and all temperatures are in degrees Celsius unless otherwise noted.

## Example I

This example describes the preparation of a cheese morsel.

## Part A

A dry blend was formed by thoroughly blending 29.70 parts whey powder, 20.50 parts shortening powder (Mid America Farms), 18.50 parts buttermilk powder, 9.30 parts malto-dextrin, 5.50 parts natural cheese flavors, 4.20 parts enzyme-modified cheese, 2.80 parts salt, 1.10 parts disodium phosphate, 0.70 part yeast, 0.20 part artificial color (Warner-Jenkinson Lake Yellow #5 and #6), and 0.50 part artificial flavor (available from National Starch and Chemical Corporation under the No. 60-1100). To this blend were then added 2.00 parts vegetable oil (Durkex 500 available from SCM). A blend was prepared by thoroughly dispersing 0.02 part salt and 0.02 part guar gum (4500 FF available from National Starch and Chemical Corp.) in 4.96 parts water.

The cheese blend was fed into the feed tube of a Kitchen Aid meat grinder equipped with a die having 0.64 cm. (0.25 in.) orifices. The individual extruded strands were separated, allowed to cool to room temperature, and then cut into individual morsels.

## Part B

Additional cheese morsels were prepared using carageenan, locust bean gum, xanthan gum, or methyl cellulose (available from Dow Chemical Co.) in place of the guar gum.

- 5 -                                  0204940

## Example II

Using the above cheese blend, the extrusion was carried out in a Wenger Model F-25 low shear screw extruder, which is a jacketed water-cooled extruder fitted with a former screw and operated at a turning rate of about 16 r.p.m. When the extrusion was carried out with cooling, a satisfactory savory piece resulted.

When a twin screw Werner Pfleiderer cooker extruder was used, the die temperature was set at 30°C, but the shear and compression within a short time (about 15-20 minutes) caused the die temperature to rise to 35°C. Free fat was liberated in the hopper, the feed powder became a paste, and would not feed on the screw to the die. The extrusion could not be completed.

## Example III

This example describes the preparation of sausage morsels.

The blend was prepared and extruded as in Example I using 22 parts spray-dried shortening of Example I, 20 parts buttermilk solids, 10 parts dextrose, 13 parts sausage seasonings and flavors, 15 parts sweet whey, 5 parts acid whey, 4 parts pregelatinized modified corn starch (available from National Starch and Chemical Corporation under the registered trademark TEXTAID®), 1 part sorbitol powder (a polyhydric humectant sold by Pfizer Chemical Co.), 0.03 part of the guar gum, 0.03 part salt, 6.94 parts water, and 3 parts of the vegetable oil.

## Example IV

This example describes the preparation of pepperoni morsels.

The blend was prepared and extruded as in Example II using 10 parts pepperoni seasonings and flavors, 18 parts sweet whey, 6.94 parts water, and the indicated amounts of the other ingredients.

## Example V

This example shows the advantage provided by adding a humectant.

The dry cheese blend of Example I was prepared with 1% sorbitol powder. The extruded cheese pieces showed improved texture. They were softer and had an improved flavor.

## Example VI

This example shows the interdependence of the water and oil in the blends, that the oil cannot produce the effect produced by the water in the blend, and that too much water cannot be present in the blend. The blends were extruded as in Example I.

## Part A

A blend similar to that of Example I was prepared by omitting the gum and water and increasing the oil level from 2 to 10% to improve the lubricity. The equipment jammed and the blend could not be extruded. Adding 0.01% guar gum and 2.48% water to the blend permitted extrusion with only slight jamming. The extrudate was very warm to the touch and fragmented more easily than the standard blend of Example I.

## Part B

A blend similar to that of Example I was prepared but with higher levels of water (close to 15%). The feed product became very tacky, clung to the screw, and would not extrude.

## Example VII

This example shows the use of the morsels of the preceding examples in various products.

## Potato Snack with Cheese Filling

A potato dough was prepared from Betty Crocker Potato Buds (1 cup potato buds, 2/3 cup water, 1 tablespoon milk, 1 tablespoon butter and 1/4 tsp. salt), and used to enrobe the cheese morsel(s) to form bite size balls.

The balls were rolled in beaten egg and then coated with bread crumbs. They were fried in deep fat at 205°C until golden brown and drained. They were served immediately or deep frozen for later consumption after reheating in a conventional or microwave oven. Unlike other cheese morsels, the cheese morsels retained their shape during the frying and reheating.

A bread dough can be substituted for the potato dough, in which case the egg dipping and breading steps are eliminated.

## Cheese Bread

Cheese morsels were incorporated at the 10% level (by weight) into a thawed frozen bread dough (from Bridgeford) by enrobing the morsels in the dough and forming the bread into a stick. The sticks were proofed and then baked at 190°C for 20 minutes, cooled, and consumed or frozen for later consumption. They can be reheated as above.

## Cheese Dip

Cheese morsels at the 8-10% level (by weight) were dispersed into seasoned sour cream. Even after 3-4 weeks of refrigeration, the morsels were substantially intact. They provided a cheese texture and flavor to the dip.

## Example VIII

This example describes other uses for the cheese and/or meat morsels.

## Dry Salad Dressing Mix

Cheese morsels can be prepared as above, but using dehydrated blue cheese, and added to a dry salad dressing mix. They should hydrate satisfactorily when the mix is reconstituted providing a pleasant cheese texture in the dressing.

### Granola Type Cheese Bars

A low moisture granola mix can be formulated with the cheese morsels.

### Pie Crust with Cheese Morsels

The cheese morsels can be incorporated in a pie crust dough, and the crust can be pre-browned before filling with a fruit mixture (e.g., apple) and baking.

### Pizza Crust with Cheese and Sausage Morsels

The savory morsels can be enrobed in a pizza dough. The crust can be pre-baked, topped with pizza sauce, and baked fully.

### Cheese Biscuits

Biscuits containing about 10-12% by weight of cheese morsels can be prepared from 150 g. of a biscuit mix and 90 g. of milk. The biscuits should be baked for about 10 minutes at 232°C.

### Cheese Crescent Rolls

Cheese morsels can be placed on the triangular dough pieces (Pillsbury Crescent Rolls), rolled into a crescent, and baked for about 15 minutes at 190°C. They may be served or frozen for later consumption after rewarming, if desired, in a microwave oven.

Summarizing this invention provides a dry savory blend suitable for preparing low moisture savory pieces and a process for their preparation by extrusion under low shear and low temperature conditions, as well as food products containing such pieces.

WHAT IS CLAIMED IS:

1. A savory dry blend suitable for the preparation of a formed savory piece, which consists essentially of a mixture of 5-85% of savory solids; 10-30% of total oil or fat; 5-30% of a filler; 3-12% of water; and 0-1% of a gum; the percentages being by weight and totalling 100%, the piece being formed under conditions of low shear and at a low temperature.

2. The blend of Claim 1, further comprising an edible salt, an acid, a humectant, and/or a natural or an artificial flavor and wherein the savory solids are present in an amount of 50-60%; the oil or fat is present in an amount of 10-25%; the filler is present in an amount of 20-30%; the water is present in an amount of 3-7%; and the gum is present in an amount of 0.01-0.05%; the piece being formed by extrusion.

3. The blend of Claim 2, wherein the savory is selected from the group consisting of cheese, meat, poultry, fish, seafood, seasoned hydrolyzed vegetable protein in dehydrated form, and mixtures thereof.

4. The blend of Claim 3, wherein the cheese is selected from the group consisting of bleu, cheddar, parmesan, and romano; the meat is selected from the group consisting of chicken, ham, sausage, or pepperoni; and the seafood is selected from the group consisting of crab or shrimp.

5. A dry, shelf-stable savory piece, which is prepared by the steps of:

(a) forming a savory dry blend under conditions of low shear and at a low temperature, the savory blend consisting essentially of a mixture of 5-85% of savory solids; 10-30% of an oil or a fat; 5-30% of a filler; 3-12% of water; and 0-1% of a gum; the percentages being by weight and totalling 100%; and

(b) cooling the formed savory piece at ambient temperature.

6. The dry piece of Claim 5, wherein the forming is carried out by extruding the savory blend.

7. The dry piece of Claim 6, wherein the extruded piece is a ribbon or a morsel prepared by the added step of cutting the ribbon after the extrusion step and prior to the cooling step.

8. The dry piece of Claim 7, wherein the ribbon or morsel is dusted with a flow agent prior to storage.

9. A food product containing the dry savory piece of Claim 5, the food product being selected from the group consisting of a dry, cooked, or non-cooked food preparation.

10. A food product prepared by coextruding the savory blend of Claim 1 and a bakery dough effective for extrusion under the low shear and low temperature forming conditions and present in an amount sufficient to form a dough extrudate filled with the savory blend.